# EUROPEAN PATENT SPECIFICATION

(11) **EP 4 064 487 B1**
(45) Date of publication and mention of the grant of the patent: **16.04.2025**
(21) Application number: 22164599.7
(22) Date of filing: 28.03.2022
(51) Int. Cl.: H02G 15/04, H01R 11/28, H01R 13/447, H01R 11/26

(54) **ELECTRICALLY INSULATING TOUCH PROTECTION DEVICE AND CONNECTION ASSEMBLY WITH SUCH A TOUCH PROTECTION DEVICE**
ELEKTRISCH ISOLIERENDE BERÜHRUNGSSCHUTZVORRICHTUNG UND VERBINDUNGSANORDNUNG MIT EINER SOLCHEN BERÜHRUNGSSCHUTZVORRICHTUNG
DISPOSITIF DE PROTECTION TACTILE D'ISOLATION ÉLECTRIQUE ET ENSEMBLE CONNEXION DOTÉ D'UN TEL DISPOSITIF DE PROTECTION TACTILE

(30) Priority: 26.03.2021 DE 102021107713
(43) Date of publication of application: 28.09.2022
(73) Proprietor: TE Connectivity Germany GmbH, 64625 Bensheim (DE)
(72) Inventor: Hoffmann, Bjoern, 64625 Bensheim (DE); Weber, Alexander, 64625 Bensheim (DE); Kaehny, Frank, 64625 Bensheim (DE); Büchling, Chris, 64625 Bensheim (DE); Wolf, Marcus, 64625 Bensheim (DE); Eheim, Manuel, 64625 Bensheim (DE); Distler, Patrick, 64625 Bensheim (DE)
(74) Representative: Grünecker Patent- und Rechtsanwälte PartG mbB

(56) References cited:
- EP-A1- 3 419 119
- EP-A1- 3 767 750
- EP-B1- 1 401 052
- DE-U1- 202019 106 641

## Description

The present invention relates to an electrically insulating touch protection device for an end of an electrical conductor, in particular an elongate electrical conductor. The present invention also relates to a connection assembly with such a touch protection device, for example, but not exclusively, for high-voltage applications in the automotive and energy-related fields.

For reasons of electrical safety, electrical conductors that connect electrical units, such as battery modules in automotive engineering and energy technology for the purpose of power transmission, are generally provided with a touch protection. For better manufacturability, the touch protection there often consists of several individual parts connected to one another. These individual parts each surround the electrical conductor in sections and are often plugged to, pressed into and/or otherwise connected to one another in an overlapping manner during the assembly of the touch protection. As explained hereafter, this is disadvantageous. Such a touch protection is disclosed in DE202019106641U1.

The overlap typically results in a blind assembly, which makes it difficult to verify the flawlessness of the connection immediately or indirectly after installation. For example, a touch protection, the individual parts of which have been plugged together incorrectly, in particular not completely, may remain undetected during an outgoing inspection. Furthermore, the flawless continuation of the connection cannot be verified beyond any doubt. During maintenance of the touch protection, it could possibly be overlooked that the individual parts of the touch protection have come loose in the course of use and are about to detach. Under certain circumstances, all of this may result in the failure of the touch protection and therefore represents a safety risk.

Accordingly, the present invention is based on the object of improving the safety of touch protection devices and connection assemblies.

This object is satisfied by a touch protection device of the type mentioned at the outset with an insulating tube made of expandable material and with a housing which is configured to receive the end of the electrical conductor, where the housing comprises an end section, which points towards the insulating tube, with a first segment and a second segment, where the first segment is configured to be insertable into the insulating tube and the second segment to be placeable onto the insulating tube, wherein insulating tube is stretched at least in part over the first segment of the end section.

The present invention is advantageous because the end section may be inserted with the first segment into the insulating tube and may be mounted with the second segment onto the insulating tube at the same time. In other words, the second segment may be placed at the same time when the first segment is inserted or when the first segment has already been inserted into the insulating tube.

The insulating tube and the housing may thus be connected and are suitable in the connected state to jointly surround the end of the electrical conductor on all sides and protect against unintentional touching. The insulating tube is further suitable to act as a touch protection for the remainder of the electrical conductor.

Above all, by inserting and placing the end section in segments, the insulating tube remains visible in part from outside housing, in particular at the end section of the housing. This enables visual monitoring to verify whether the insulating tube and the housing have been properly connected and whether this condition continues to exits, respectively. The risk of undetected incorrect assembly and/or failure is thus reduced so that the touch protection device according to the invention provides increased level of safety.

The underlying object may also be satisfied by a connection assembly with a touch protection device according to the invention and with an electrical conductor, where the end of the electrical conductor is disposed in the insulating tube and in the housing of the touch protection device, and where the first segment of the end section is inserted into the insulating tube and the second segment of the end section is placed onto the insulating tube.

The connection assembly according to the invention likewise benefits from the advantages already mentioned. In particular, the insulating tube surrounds at least in part the first segment from the outside. The exact positioning of the insulating tube in relation to the housing may therefore be verified by way of a visual inspection. This increases the safety of the connection assembly according to the invention.

The invention may be further improved by the following embodiments which are advantageous by themselves and which may be combined with one another at random.

According to a possible embodiment of the touch protection device, the end section of the housing may be configured in the form of a sleeve and divided into two parts. For this purpose, the first segment and the second segment may be arranged with respect to the insulating tube consecutively in the circumferential direction. Furthermore, the first segment and the second segment may be separated from one another by a gap, in particular by a gap that extends with respect to the insulating tube in the longitudinal direction. The gap is used to lead the wall of the insulating tube through in the circumferential direction between the first segment and the second segment.

The housing preferably comprises two gaps, where the insulating tube extends through one of the two gaps from outside the housing to the inside and through the other of the two gaps from inside the housing to the outside again. As a result, the wall of the insulating tube may be closed in the circumferential direction, i.e. configured without slits or discontinuations.

In general, the housing may have any desired even number of gaps which are distributed in the circumferential direction on the end section of the housing and each separate an even number of segments of the end section from one another in pairs. The wall of the insulating tube in the circumferential direction accordingly runs through the gaps alternately from outside the housing to the inside and from inside the housing to the outside.

The insulating tube is advantageously configured separately, so as to be drawn onto the electrical conductor. In particular, the insulating tube may be put over or elastically drawn over the electrical conductor from the end of the electrical conductor. The insulating tube may there receive the electrical conductor subject to play or with a precise fit. This means that an inner diameter of the insulating tube is preferably greater than or equal to an outer diameter of the electrical conductor. As a result, the insulating tube and the electrical conductor remain movable relative to one another for locally limited mechanical stress compensation motions. The resulting connection assembly is then less rigid and is consequently easier to handle during installation.

Alternatively, the insulating tube and the electrical conductor may also be connected to one another by way of a force fit in that the inner diameter of the insulating tube is selected to be at least slightly smaller than the outer diameter of the electrical conductor.

The insulating tube is made of elastically expandable material, for example, silicone, at least at one end region. In particular, the entire insulating tube may be made from this material as a soft component. The insulating tube may optionally be configured as a heat protection tube in that a glass fiber mesh is incorporated into the material of the insulating tube.

The housing is preferably made of material that is dimensionally stable at least in comparison to the end region of the insulating tube. Furthermore, the housing may have a receiving section which surrounds the end of the electrical conductor in a shell-like manner. The end section and the receiving section of the housing may be arranged in the longitudinal direction next to one another and be shaped to be monolithic. The end of the electrical conductor may there project from the end region of the insulating tube and be received in the receiving section of the housing.

In order to facilitate the reception of the end of the electrical conductor in the housing, the housing may be formed from two housing halves that may preferably be joined according to a further possible embodiment of the touch protection device. In the joined state, the two housing halves may each jointly form the end section and the receiving section of the housing. In particular, one of the two housing halves may comprise the first segment of the end section and the other of the two housing halves may comprise the second segment of the end section. More precisely, the first segment may continue the receiving section of one housing half in a semitubular manner and the second segment may continue the receiving section of the other housing half in a semitubular manner, where an inner diameter of the second segment is greater than an outer diameter of the first segment.

The two housing halves may be present as separate components before being joined or may be connected to one another in a pivotable manner by way of a hinge.

According to a further possible embodiment of the touch protection device, the two housing halves may each comprise latching elements that are mutually complementary. The two housing halves may be latched to one another by way of the latching elements. Alternatively, the two housing halves may be screwed, adhesively bonded and/or welded together.

To establish a positive-fit connection which prevents a relative motion between the housing and the insulating tube in the longitudinal direction, the end section of the housing and the insulating tube may each comprise positive-fit elements that are mutually complementary. In other words, one positive-fit element each is arranged on the end section of the housing and one associated positive-fit element is arranged on the insulating tube. More precisely, the positive-fit element of the end section is arranged on the first segment of the first housing half.

One of the positive-fit elements is preferably configured as a projection, in particular a pin-shaped, mandrel-shaped, or dome-shaped projection, and another of the positive-fit elements is configured as a receptacle that is complementary to the projection. This results in a comparatively simple geometry of the positive-fit elements.

The positive-fit connection between the housing and the insulating tube may be verified particularly easily after assembly if the positive-fit element configured as a receptacle is disposed in the end region of the insulating tube and is configured as a passage opening. The passage opening may there extend from the inside of the insulating tube to the outside. The positive-fit element configured as a projection may accordingly be disposed on the first segment of the end section. In particular, the projection may project from the first segment with respect to the insulating tube in the radial direction, point outwardly and protrude through the passage opening.

A free end of the projection is then visible from the outside. In particular, it may be verified by visual inspection in this manner whether the projection in fact protrudes properly through the passage opening.

In order to prevent stress peaks from occurring in the material of the insulating tube, the passage opening may be configured as a circular hole. Optionally, the cross section of the passage opening may correspond to the projection.

The free end of the projection may optionally comprise a latching bead. The latching bead may run around the free end of the projection at least in sections and thereby, for example, prevent the insulating tube from slipping off the projection.

Additionally or alternatively, the projection may be chamfered. In other words, the free end of the projection may have a chamfer which is directed towards the insulating tube and serves as an insertion chamfer when the first segment is inserted into the insulating tube.

The positive-fit element configured as a projection and arranged on the first segment of the first housing half may function as one of the latching elements already described above and be configured to be complementary to a latching element arranged on the second segment of the second housing half. For this purpose, the projection may be configured to be flattened on a side facing away from the second housing half. This creates a bearing surface for the associated latching element of the second housing half, which is formed, for example, by a claw-shaped latching hook or a pair of claw-shaped latching hooks which, when the housing halves are joined, engage around the free end of the projection and latch onto the bearing surface.

This results in a partial functional integration in the relevant element (i.e. latching element and positive-fit element), which contributes to saving installation space.

In order to lock the positive-fit connection between the insulating tube and the housing, the touch protection device may comprise a radial lock according to a further possible embodiment. The radial lock may be configured as a locking element that is configured to be complementary to the positive-fit element of the first segment. The radial lock may be disposed, for example, on the second segment of the end section and lock the insulating tube, preferably in the radial direction, on the first segment. In other words, the radial lock prevents the insulating tube from being removed unintentionally from the first segment in the radial direction.

In order to obtain further functional integration, at least one of the latching elements on the second segment of the second housing half may serve as a locking element and thereby form the radial lock. For example, the pair of claw-shaped latching hooks just described may fulfill the function of the radial lock. The latching bead on the free end of the projection advantageously supports the radial lock by preventing the pair of claw-shaped latching hooks from being inadvertently deflected or slipping off in the radial direction.

Alternatively, the touch protection device may also comprise a separate locking clip as a locking element which is configured to be mounted on the free end of the projection and which assumes the function of the radial lock. In the attached state, the locking clip may provide a stop surface which points towards the insulating tube and which is in particular larger than the cross-sectional area of the passage opening. As a result, the locking clip also prevents the insulating tube from being removed unintentionally from the first segment.

In order to strengthen the positive-fit connection between the housing and the insulating tube, several pairs of positive positive-fit elements may be distributed on the insulating tube and the end section of the housing. The pairs of positive-fit elements may be distributed uniformly or non-uniformly in particular over the circumference of the touch protection device. In general, the angular distances between the individual positive-fit elements of the housing should correspond to the angular distances between the individual positive-fit elements of the insulating tube in order to enable the positive-fit elements associated with one another to engage with one another. Optionally, the length distances between the individual positive-fit elements of the housing may also correspond to the length distances between the individual positive-fit elements of the insulating tube.

For example, two pairs of positive-fit elements may be disposed to be diametrically opposite, i.e. the respective angular distances are 180°. The insulating tube may accordingly have two passage openings and the end section of the housing two projections. The two passage openings are arranged on oppositely disposed sides of the insulating tube and the two projections extend in opposite directions from the end section, in particular away from the first segment of the end section. Advantageously, each of the two projections penetrates only one passage opening of the insulating tube. In this embodiment, the insulating tube may consequently not be removed from the housing simply by sliding it. Instead, the insulating tube must be widened at the end region in order to be able to be removed from the housing. This reduces the likelihood of unintentional detachment of the insulating tube from the housing.

Conversely, the insulating tube in this embodiment must be widened at the end region manually or using a special tool in order to be able to be slipped over the first segment of the end section during assembly. The end region of the insulating tube may then be relaxed.

The insulating tube is stretched at least in part over the first segment of the end section. In other words, the outer diameter of the first segment may at least slightly exceed the inner diameter of the insulating tube. This results in a frictionally-engaged connection between the insulating tube and the first segment of the end section. This frictionally-engaged connection may be used in addition or as an alternative to the positive-fit connection described above to attach the insulating tube to the housing.

A further frictionally-engaged connection may optionally be created in that the insulating tube is pressed between the first segment and the second segment of the end section. This is useful, for example, as an additional measure for attaching the insulating tube to the housing when the housing is formed from the two housing halves. To enlarge the pressing surfaces, the two housing halves, in particular the first segment and the second segment, may comprise jaw sections which overlap in the radial direction and between which the gaps extend and the wall of the insulating tube is pressed together.

As an alternative to the embodiment with two housing halves, it is also conceivable to configure the housing in one piece or integrally. As part of the assembly, the first segment would there be inserted in the longitudinal direction into the insulating tube and at the same time the second segment would be mounted onto the insulating tube in the longitudinal direction while the wall of the insulating tube would slide into the gap in a direction opposite the longitudinal direction.

In order to prevent the insulating tube from being pulled out unintentionally from the integrally formed housing, the positive-fit connection already mentioned above may also be established between the insulating tube and the integrally formed housing. For example, the first segment of the integrally formed housing may comprise the pin-shaped, mandrel-shaped, or dome-shaped projection for this purpose. In this case, the projection is preferably disposed on a side of the first segment facing away from the second segment. In particular, the projection may extend in the radial direction away from the second segment. The respective passage opening is optionally formed on the insulating tube.

As part of the assembly of this embodiment, the insulating tube and the housing may initially be aligned relative to one another in such a way that the passage opening and the projection are aligned in the longitudinal direction. The insulating tube on its side which is aligned with the projection in the longitudinal direction may subsequently on one side be stretched in the radial direction so that the projection does not hinder the insertion of the first segment into the insulating tube. The first segment may then be inserted into the insulating tube until the passage opening is aligned with the projection in the radial direction. Finally, the insulating tube with the passage opening may be mounted on the projection in order to thereby obtain the positive-fit connection.

In the embodiment with an integrally formed housing, the positive-fit connection between the insulating tube and housing may optionally be locked with the locking clip already described above.

In addition or as an alternative to the positive-fit and frictionally-engaged connections already described, the connection assembly may also comprise a further similarly configured housing which is arranged at the opposite end of the electrical conductor. In this embodiment, the insulating tube may be held between the housing and the further housing to lock it in position in the longitudinal direction.

According to a possible embodiment of the connection assembly, the electrical conductor may be configured as a round conductor, preferably a round conductor made of electrically conductive braid. This makes it possible to bend the electrical conductor freely when the connection assembly is installed and thereby to adapt the profile of the connection assembly to the geometric environmental conditions. The shape and choice of material of the electrical conductor, however, is not restricted thereto and may be adapted to the respective application.

According to a further possible embodiment of the connection assembly, the end of the electrical conductor may be configured as a battery contact. In other words, a contact element may be attached to the electrical conductor and be configured to be connected to a battery, in particular to a traction battery or a battery module of an electric vehicle. The present invention may then be used directly in battery applications.

To attach the contact element, the connection assembly may comprise an attachment element, for example, a screw. For reasons of strength, the screw is preferably made of metal material. Furthermore, the screw may comprise an electrically insulating protective cap which, together with the touch protection device, prevents the electrically conductive components of the connection assembly from being touched unintentionally.

The invention shall be explained hereafter in more detail with reference to the drawings on the basis of several embodiments, the different features of which may be combined with one another as required in accordance with the above remarks. Similar, identical, and functionally identical elements in the drawings are provided with the same reference numerals to the extent as appropriate,
where
- Fig. 1: shows a schematic perspective exploded view of a connection assembly with an electrical conductor and a touch protection device according to an exemplary embodiment;
- Fig. 2: shows a schematic perspective view of a first assembly step of the connection assembly from Figure 1;
- Fig. 3: shows a schematic perspective view of a second assembly step of the connection assembly from Figure 1;
- Fig. 4: shows a schematic perspective view of a third assembly step of the connection assembly from Figure 1;
- Fig. 5: shows a schematic perspective view of a fourth assembly step of the connection assembly from Figure 1; and
- Fig. 6: shows a schematic perspective view of the connection assembly from Figure 5 as a partial section.

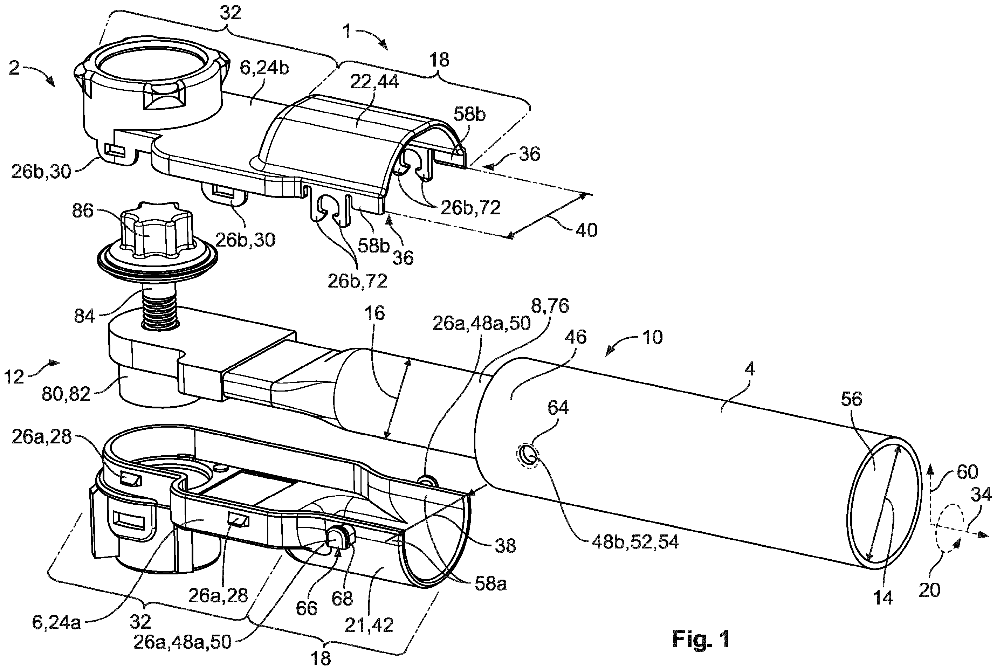

The schematic structure of a touch protection device 1 according to the invention and a connection assembly 2 according to the invention of an exemplary embodiment shall be described hereafter with reference to Figures 1 to 6.

As may be seen from Figure 1, touch protection device 1 in the exemplary embodiment may comprise an insulating tube 4 and a housing 6. Connection assembly 2 in turn comprises touch protection device 1 and a preferably elongate electrical conductor 8.

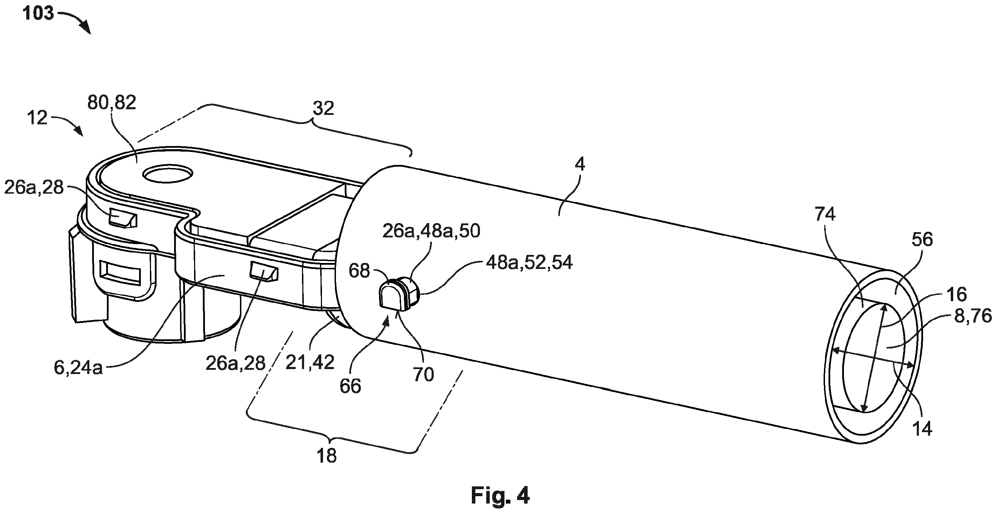

Insulating tube 4 is advantageously configured separately so that it may be drawn onto electrical conductor 8. In particular, insulating tube 4 may be slipped over electrical conductor 8 from one end of electrical conductor 8. Insulating tube 4 may there receive electrical conductor 8 subject to play.In other words, an inner diameter 14 of insulating tube 4 is greater than an outer diameter 16 of electrical conductor 8. This is shown most clearly in Figure 4.

Alternatively, insulating tube 4 may also receive electrical conductor 8 with an exact fit when inner diameter 14 of insulating tube 4 corresponds to outer diameter 16 of electrical conductor 8. Alternatively, insulating tube 4 and electrical conductor 8 may further be connected to one another by way of a force fit in that inner diameter 14 of insulating tube 4 is selected to be at least slightly smaller than outer diameter 16 of electrical conductor 8.

Insulating tube 4 and housing 6 are each made of electrically insulating materials. Insulating tube 4 is further made of expandable elastic material, for example, silicone, at least at one end region 10 of insulating tube 4. In particular, entire insulating tube 4 may be made from this material as a soft component and is stretchable compared to housing 6. Insulating tube 4 may optionally be configured to be heat-resistant. For this purpose, glass fiber mesh may be incorporated into the material of insulating tube 4.

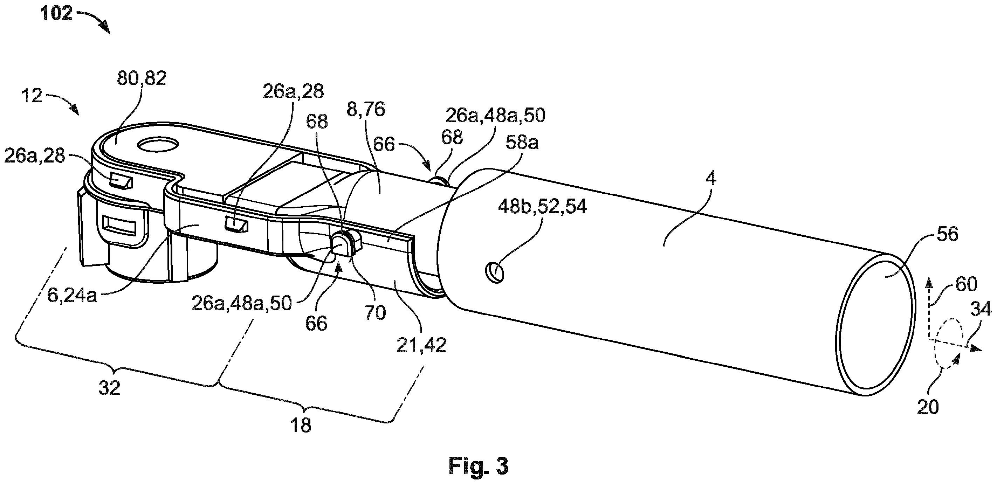

Housing 6 is made of a material which is dimensionally stable at least in comparison to end region 10 of insulating tube 4. Furthermore, housing 6 is configured to receive end 12 of electrical conductor 8. In particular, end 12 of electrical conductor 8 may project from end region 10 of insulating tube 4 and be received in housing 6. For this purpose, housing 6 may comprise a receiving section 32 which surrounds end 12 of electrical conductor 8 in a shell-like manner (see Figure 3).

As may also be seen from Figure 1, housing 6 has a preferably sleeve-shaped end section 18 pointing to insulating tube 4 and comprising a first segment 21 and a second segment 22 with respect to insulating tube 4 following first segment 21 in circumferential direction 20. End section 18 and receiving section 32 of housing 6 may be arranged with respect to insulating tube 4 next to one another in longitudinal direction 34 and be shaped to be monolithic.

First segment 21 may be inserted into insulating tube 4 and second segment 22 is configured such that it may be placed onto insulating tube 4. In other words, second segment 22 may be placed at the same time as first segment 21 is inserted or when first segment 21 has already been inserted into insulating tube 4.

First segment 21 and second segment 22 together form end section 18 of housing 6 and are each separated from one another by a gap 36 extending in longitudinal direction 34. Housing 6 comprises, for example, two gaps 36, where wall 46 of insulating tube 4 extends in circumferential direction 20 through one of two gaps 36 from outside housing 6 to the inside and through the other of two gaps 36 from inside housing 6 to the outside. Wall 46 of insulating tube 4 respectively is lead through between first segment 21 and second segment 22.

It is also conceivable that housing 6 comprises any even number of gaps that are distributed in circumferential direction 20 at end section 18 of housing 6 and each separate an even number of segments forming end section 18 of housing 6 from one another. Wall 46 of insulating tube 4 then alternately extends in circumferential direction 20 through one of the gaps from outside housing 6 to the inside and through the gap adjacent in circumferential direction 20 from inside housing 6 to the outside. In particular, insulating tube 4 is lead through between two adjacent segments in circumferential direction 20.

In the exemplary embodiment shown, housing 6 is formed from two housing halves 24a, 24b, where one of two housing halves 24a comprises first segment 21 and the other of two housing halves 24b comprises second segment 22. Furthermore, two housing halves 24a, 24b each together form end section 18 and receiving section 32 of housing 6.

First segment 21 continues receiving section 32 of first housing half 24a in a semitubular manner. Second segment 22 accordingly continues receiving section 32 of second housing half 24b in a semitubular manner, where an inner diameter 40 of second segment 22 is greater than an outer diameter 38 of first segment 21.

In particular, first segment 21 forms a circumferential segment 42 of end section 18 which surrounds electrical conductor 8 in part from the outside in circumferential direction 20 and is in turn surrounded on the outside by insulating tube 4. Second segment 22 forms a remaining segment 44 of end section 18 which surrounds insulating tube 4 at least in part from the outside. Remaining segment 24 there supplements circumferential segment 42 toward end section 18 of housing 6.

Housing halves 24a, 24b are configured to be joined. In the embodiment shown in Figure 1, housing halves 24a, 24b each comprise jaw sections 58a, 58b which overlap in radial direction 60 when housing halves 24a, 24b are joined. Gaps 36 each run between jaw sections 58a, 58b.

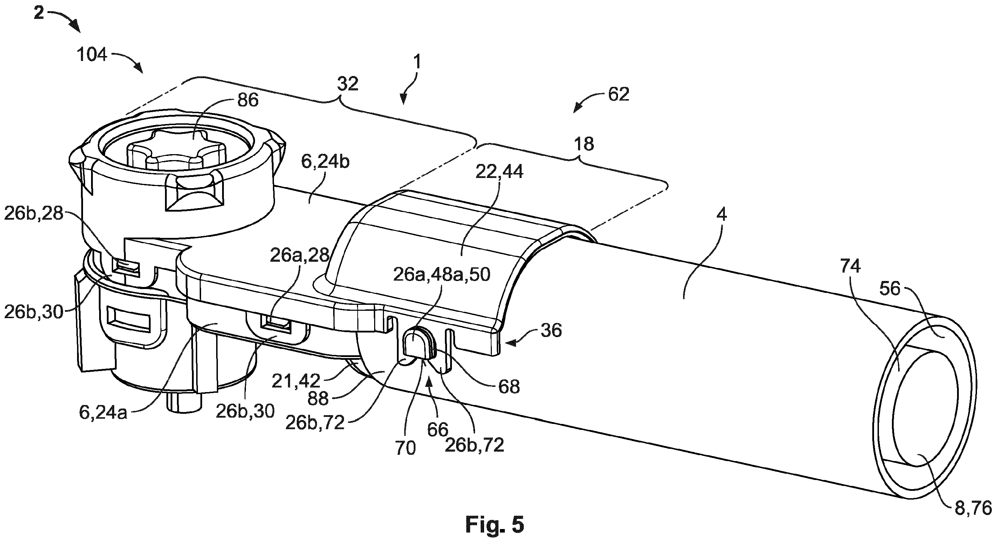

Furthermore, housing halves 24a, 24b are each shown in Figure 1 as separate components, but may also be connected to one another in a pivotable manner by way of a hinge. In addition, two housing halves 24a, 24b comprise latching elements 26a, 26b that are mutually complementary. In the exemplary embodiment shown, first housing half 24a comprises a plurality of latching tabs 28 as latching elements 26a. Second housing half 24b comprises latching windows 30 that are complementary thereto as latching elements 26b, into which latching tabs 28 hook in a latching manner (see Figure 5). Alternatively or additionally, housing halves 24a, 24b may be screwed, adhesively bonded, and/or welded together.

As may also be seen from Figure 1, end section 18 of housing 6 and insulating tube 4 each comprise mutually complementary positive-fit elements 48a, 48b for establishing a positive-fit connection. One of positive-fit elements 48a is preferably configured as a projection 50 and another of positive-fit elements 48a is configured as a receptacle that is complementary to projection 52. Unlike the pin shape shown in Figure 1, projection 50 may also be configured in the shape of a mandrel or a dome.

Positive-fit element 48b configured as a receptacle 52 is disposed on insulating tube 4, preferably in end region 10 of insulating tube 4, and is formed by a passage opening 52. Passage opening 54 extends as a circular hole from inside 56 of insulating tube 4 to the outside. Optionally, passage opening 54 may correspond in its the cross section to the projection.

Positive-fit element 48a configured as a projection 50 is accordingly disposed on first segment 21 of end section 18 of housing 6. Projection 50 projects from first segment 21 perpendicular to longitudinal direction 34 in radial direction 60 and protrudes through passage opening 54 so that a relative displacement in longitudinal direction 34 between insulating tube 4 and first segment 21 is prevented (see Figures 4 and 5). In particular, projection 50 penetrates insulating tube 4 only once.

Positive-fit element 48a configured as a projection 50 may furthermore comprise a free end 66, where free end 66 comprises a latching bead 68. Latching bead 68 runs around free end 66 at least in sections and thereby gives projection 50 a mushroom-like shape.

Projection 50 may also serve as a latching element 26a on first housing half 24a. For this purpose, projection 50 may be configured to be flattened on a side facing away from second housing half 24b. This creates a bearing surface 70 for associated latching element 26b of second housing half 24b which is formed, for example, by a claw-shaped latching hook 72 or a pair of claw-shaped latching hooks 72 which, when housing halves 24a, 24b are joined, engage around free end 66 of projection 50 and latch onto bearing surface. 70 (see Figure 5).

The pair of claw-shaped latching hooks 72 also fulfills a function of a radial lock which locks insulating tube 4 in radial direction 60 on first segment 21. In other words, the pair of claw-shaped latching hooks 72 prevents insulating tube 4 from being removed unintentionally in radial direction 60 from first segment 21. Latching bead 68 on free end 66 of projection 50 again advantageously prevents the pair of claw-shaped latching hooks 72 from unintentionally deflecting or slipping off in radial direction 60 and thereby additionally supports the radial lock.

Alternatively, the radial lock may also be implemented by a separate locking clip (not shown) which is mounted on free end 66 of projection 50. In the mounted state, the locking clip may provide a stop surface that points towards insulating tube 4 and that is in particular larger than the cross-sectional area of passage opening 54 and thereby prevents insulating tube 4 from being removed from projection 50 over the locking clip.

As may be seen from Figure 1, several pairs of positive-fit elements 48a, 48b may be arranged distributed over the circumference, preferably uniformly, on end section 18 of housing 6 and on insulating tube 4. Pairs of positive-fit elements 48a, 48b may also be distributed with non-uniform spacing over the circumference as long as the angular distances between positive-fit elements 48a of housing 6 correspond to the angular distances between positive-fit elements 48b of insulating tube 4.

In the exemplary embodiment shown, two pairs of positive-fit elements 48a, 48b are disposed diametrically opposite one another. In particular, first housing half 24a comprises two projections 50 which project from first segment 21 in opposite directions. Accordingly, insulating tube 4 comprises two passage openings 54 which are arranged on radially oppositely disposed sides of insulating tube 4.

In Figures 1 to 6, electrical conductor 8 is shown as a round conductor 76. In particular, electrical conductor 8 may be an electrically conductive braid 74 with a round cross-sectional area. However, the shape of electrical conductor 8 is not restricted thereto and may be adapted to the respective application.

In the exemplary embodiment shown, end 12 of electrical conductor 8 is configured as a battery contact 80. In other words, a contact element 82 is attached to end 12 of electrical conductor 8 and configured to be connected to a battery, in particular to a traction battery or a battery module of an electric vehicle.

To attach contact element 82 to the battery, connection assembly 2 comprises an attachment element, such as a screw 84. Screw 84 is optionally made of a metal material and may comprise an electrically insulating protective cap 86 which, together with touch protection device 1, prevents the electrically conductive components of connection assembly 2 from being touched unintentionally.

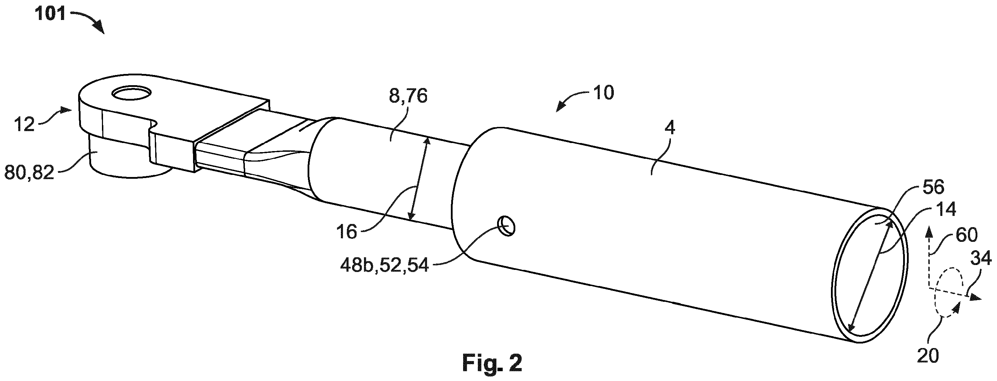

The assembly of the exemplary embodiment shown of connecting arrangement 2 may be carried out as follows:
In a first assembly step 101, insulating tube 4 is drawn over end 12 of electrical conductor 8 onto electrical conductor 8 and positioned spaced from end 12 of electrical conductor 8 (see Figure 2).

In a second assembly step 102, end 12 of electrical conductor 8 is placed into receiving section 32 of first housing half 24a (see Figure 3). Alternatively, first housing half 24a may of course also be placed on end 12 of electrical conductor 8.

In a third assembly step 103, end region 10 of insulating tube 4 is widened, for example, manually or with a special tool, and drawn over first segment 21 of first housing half 24a. Alternatively, first segment 21 of first housing half 24a may also be inserted together with electrical conductor 8 into widened end region 10 of insulating tube 4. It is important there that positive-fit elements 48a, 48b are aligned in pairs. End region 10 of insulating tube 4 is then relaxed so that positive-fit elements 48a, 48b engage in pairs (see Figure 4).

In a fourth assembly step 104, second housing half 24b is joined with first housing half 24a so that latching elements 26a, 26b latch into one another. In particular, second segment 22 is mounted on end region 10 of insulating tube 4, where part 88 of insulating tube 4 remains visible (see Figure 5).

Free end 66 of projection 50 may optionally be chamfered. In other words, free end 66 may have a chamfer (not shown) which is directed towards insulating tube 4 and contributes to end region 10 of insulating tube 4 expanding by itself in third assembly step 103 when first segment 21 is inserted.

As a result of third assembly step 103, end region 10 of insulating tube 4 is stretched over first segment 21 of end section 18 so that first segment 21 and insulating tube 4 enter into a frictionally-engaged connection.

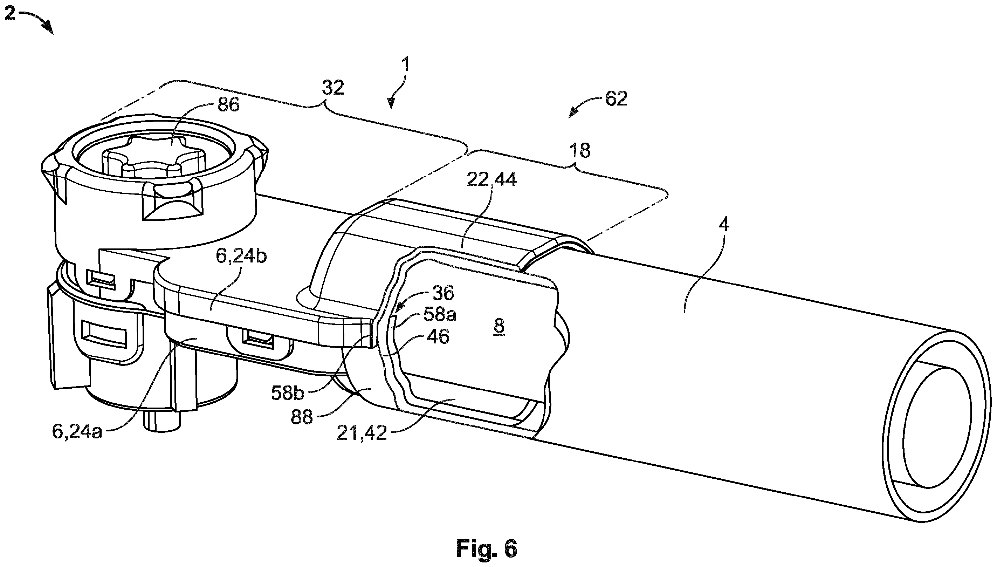

Furthermore, insulating tube 4 may be pressed between first segment 21 and second segment 22 of end section 18. In particular, jaw sections 58a, 58b may press insulating tube 4 to create a further frictionally-engaged connection (see Figure 6).

As an alternative embodiment not shown in the figures, it is also conceivable to manufacture housing 6 in one piece or integrally. As part of the assembly, first segment 21 would there be inserted in longitudinal direction 34 into insulating tube 4 and at the same time second segment 22 would be mounted onto insulating tube 4 in longitudinal direction 34 while wall 46 of insulating tube 4 would slide in a direction opposite to longitudinal direction 34 into gap 36.

For establishing the positive-fit connection already mentioned above, first segment 21 of housing 6 formed integrally may comprise pin-shaped projection 50, preferably on a side facing away from second segment 22. In particular, projection 50 may extend away from second segment 22 in radial direction 60. Passage opening 54 is accordingly formed on insulating tube 4.

As part of the assembly of this embodiment, insulating tube 4 and housing 6 may initially be aligned relative to one another in such a way that passage opening 54 and projection 50 are aligned in longitudinal direction 34. Insulating tube 4 on its side in longitudinal direction 34 which is aligned with projection 50 may subsequently be stretched on one side in radial direction 60 so that projection 50 does not hinder the insertion of first segment 21 into insulating tube 4. First segment 21 may then be inserted into insulating tube 4 until passage opening 54 is aligned with projection 54 in radial direction 60. Finally, insulating tube 4 with passage opening 54 may be mounted on projection 50 to thereby obtain the positive-fit connection.

In the embodiment with an integrally formed housing 6, the positive-fit connection between insulating tube 4 and housing 6 may optionally be locked with the locking clip already described above.

In addition or as an alternative to the positive-fit and frictionally-engaged connections already described, the connection assembly may also comprise a further similarly configured housing which is arranged at the oppositely disposed other end of the electrical conductor. The insulating tube may be held between the housing and the further housing to lock it in position in the longitudinal direction.

### REFERENCE NUMERALS

- 1: touch protection device
- 2: connection assembly
- 4: insulating tube
- 6: housing
- 8: conductor
- 10: end region
- 12: end
- 14: inner diameter
- 16: outer diameter
- 18: end section
- 20: circumferential direction
- 21: first segment
- 22: second segment
- 24a, 24b: housing half
- 26a, 26b: latching element
- 28: latching tab
- 30: latching window
- 32: receiving section
- 34: longitudinal direction
- 36: gap
- 38: outer diameter
- 40: inner diameter
- 42: circumferential segment
- 44: remaining segment
- 46: wall
- 48a, 48b: positive-fit element
- 50: projection
- 52: receptacle
- 54: passage opening
- 56: interior
- 58a, 58b: jaw section
- 60: radial direction
- 62: state
- 64: cross section
- 66: free end
- 68: latching bead
- 70: bearing surface
- 72: latching hook
- 74: braid
- 76: round conductor
- 80: battery contact
- 82: contact element
- 84: screw
- 86: protective cap
- 88: part
- 101: first assembly step
- 102: second assembly step
- 103: third assembly step
- 104: fourth assembly step

## Claims

1. Electrically insulating touch protection device (1) for an end (12) of an electrical conductor (8) with an insulating tube (4) made of expandable material and with a housing (6) which is configured to receive said end (12) of said electrical conductor (8), wherein said housing (6) comprises an end section (18), which points towards said insulating tube (4) in longitudinal direction, with a first segment (21) and a second segment (22), wherein said first segment (21) is inserted into said insulating tube (4) in the longitudinal direction and said second segment (22) is placed onto said insulating tube (4), wherein said insulating tube (4) is stretched at least in part over said first segment (21) of said end section (18).

2. Touch protection device (1) according to claim 1, wherein said first segment (21) and said second segment (22) are separated from one another by a gap (36).

3. Touch protection device (1) according to claim 2, wherein said housing (6) comprises two gaps (36), wherein said insulating tube (4) extends through one of said two gaps (36) from outside said housing (6) to the inside and through the other of said two gaps (36) from inside said housing (6) to the outside.

4. Touch protection device (1) according to one of the claims 1 to 3, wherein said housing (6) is formed from two housing halves (24a, 24b), wherein one of said two housing halves (24a) comprises said first segment (21) of said end section (18) of said housing (6), and wherein the other of said two housing halves (24b) comprises said second segment (22) of said end section (18) of said housing (6).

5. Touch protection device (1) according to claim 4, wherein said two housing halves (24a, 24b) each comprise mutually complementary latching elements (26a, 26b).

6. Touch protection device (1) according to one of the claims 1 to 5, wherein said end section (18) of said housing (6) and said insulating tube (4) each comprise mutually complementary positive-fit elements (48a, 48b).

7. Touch protection device (1) according to claim 6, wherein one of said positive-fit elements (48a) is configured as a projection (50) and another of said positive-fit elements (48b) is configured as a receptacle (52) that is complementary to said projection (50).

8. Touch protection device (1) according to claim 7, wherein said positive-fit element (48b) configured as a receptacle (52) is disposed on said insulating tube (4) and is configured as a passage opening (54).

9. Touch protection device (1) according to claim 7 or 8, wherein said positive-fit element (48a) configured as a projection (50) comprises a free end (66), and wherein said free end (66) comprises a latching bead (68).

10. Touch protection device (1) according to one of the claims 1 to 9, wherein said second segment (22) of said end section (18) comprises a radial lock which locks said insulating tube (4) on said first segment (21).

11. Touch protection device (1) according to claims 5 and 10, wherein at least one of said latching elements (26b) is arranged on said second segment (22) and forms said radial lock.

12. Touch protection device (1) according to one of the claims 6 to 11, wherein several pairs of positive-fit elements (48a, 48b) are distributed on said end section (18) of said housing (6) and said insulating tube (4).

13. Connection assembly (2) with a touch protection device (1) according to one of the claims 1 to 12 and with an electrical conductor (8), wherein said end (12) of said electrical conductor (8) is disposed in said insulating tube (4) and in said housing (6) of said touch protection device (1), wherein said first segment (21) of said end section (18) is inserted into said insulating tube (4) and said second segment (22) of said end section (18) is mounted on said insulating tube (4).

14. Connection assembly (2) according to claim 13, wherein said end (12) of said electrical conductor (8) is configured as a battery contact (80).

## Patentansprüche

1. Elektrisch isolierende Berührungsschutzvorrichtung (1) für ein Ende (12) eines elektrischen Leiters (8) mit einem Isolierrohr (4) aus dehnbarem Material und mit einem Gehäuse (6), das zur Aufnahme des Endes (12) des elektrischen Leiters (8) ausgebildet ist, wobei das Gehäuse (6) einen Endabschnitt (18) aufweist, der in Längsrichtung zum Isolierrohr (4) hinweist mit einem ersten Segment (21) und einem zweiten Segment (22), wobei das erste Segment (21) in das Isolierrohr (4) in Längsrichtung eingesetzt ist und das zweite Segment (22) auf das Isolierrohr (4) aufgesetzt ist, wobei das Isolierrohr (4) zumindest teilweise über das erste Segment (21) des Endabschnitts (18) gespannt ist.

2. Berührungsschutzvorrichtung (1) nach Anspruch 1, wobei das erste Segment (21) und das zweite Segment (22) durch einen Spalt (36) voneinander getrennt sind.

3. Berührungsschutzvorrichtung (1) nach Anspruch 2, wobei das Gehäuse (6) zwei Spalte (36) aufweist, wobei sich das Isolierrohr (4) durch einen der beiden Spalte (36) von außerhalb des Gehäuses (6) nach innen und durch den anderen der beiden Spalte (36) von innerhalb des Gehäuses (6) nach außen erstreckt.

4. Berührungsschutzvorrichtung (1) nach einem der Ansprüche 1 bis 3, wobei das Gehäuse (6) aus zwei Gehäusehälften (24a, 24b) gebildet ist, wobei eine der beiden Gehäusehälften (24a) das erste Segment (21) des Endabschnitts (18) des Gehäuses (6) umfasst, und wobei die andere der beiden Gehäusehälften (24b) das zweite Segment (22) des Endabschnitts (18) des Gehäuses (6) umfasst.

5. Berührungsschutzvorrichtung (1) nach Anspruch 4, wobei die beiden Gehäusehälften (24a, 24b) jeweils zueinander komplementäre Verriegelungselemente (26a, 26b) aufweisen.

6. Berührungsschutzvorrichtung (1) nach einem der Ansprüche 1 bis 5, wobei der Endabschnitt (18) des Gehäuses (6) und das Isolierrohr (4) jeweils zueinander komplementäre Formschlusselemente (48a, 48b) aufweisen.

7. Berührungsschutzvorrichtung (1) nach Anspruch 6, wobei eines der Formschlusselemente (48a) als Vorsprung (50) und ein anderes der Formschlusselemente (48b) als eine zu dem Vorsprung (50) komplementäre Aufnahme (52) ausgebildet ist.

8. Berührungsschutzvorrichtung (1) nach Anspruch 7, wobei das als Aufnahme (52) ausgebildete Formschlusselement (48b) an dem Isolierrohr (4) angeordnet und als Durchgangsöffnung (54) ausgebildet ist.

9. Berührungsschutzvorrichtung (1) nach Anspruch 7 oder 8, wobei das als Vorsprung (50) ausgebildete Formschlusselement (48a) ein freies Ende (66) aufweist, und wobei das freie Ende (66) einen Rastwulst (68) aufweist.

10. Berührungsschutzvorrichtung (1) nach einem der Ansprüche 1 bis 9, wobei das zweite Segment (22) des Endabschnitts (18) eine radiale Verriegelung aufweist, die das Isolierrohr (4) an dem ersten Segment (21) verriegelt.

11. Berührungsschutzvorrichtung (1) nach einem der Ansprüche 5 und 10, wobei mindestens eines der Rastelemente (26b) an dem zweiten Segment (22) angeordnet ist und die radiale Verriegelung bildet.

12. Berührungsschutzvorrichtung (1) nach einem der Ansprüche 6 bis 11, wobei mehrere Paare von Formschlusselementen (48a, 48b) auf dem Endabschnitt (18) des Gehäuses (6) und dem Isolierrohr (4) verteilt sind.

13. Verbindungsanordnung (2) mit einer Berührungsschutzvorrichtung (1) nach einem der Ansprüche 1 bis 12 und mit einem elektrischen Leiter (8), wobei das Ende (12) des elektrischen Leiters (8) im Isolierrohr (4) und im Gehäuse (6) der Berührungsschutzvorrichtung (1) angeordnet ist, wobei der erste Abschnitt (21) des Endabschnitts (18) in das Isolierrohr (4) eingesetzt ist und der zweite Abschnitt (22) des Endabschnitts (18) am Isolierrohr (4) befestigt ist.

14. Verbindungsanordnung (2) nach Anspruch 13, wobei das Ende (12) des elektrischen Leiters (8) als Batteriekontakt (80) ausgebildet ist.

## Revendications

1. Dispositif de protection tactile électriquement isolant (1) pour une extrémité (12) d'un conducteur électrique (8) avec un tube isolant (4) en matériau extensible et avec un boîtier (6) qui est configuré pour recevoir ladite extrémité (12) dudit conducteur électrique (8), dans lequel ledit boîtier (6) comprend une section d'extrémité (18) qui pointe vers ledit tube isolant (4) en direction longitudinale, avec un premier segment (21) et un deuxième segment (22), dans lequel ledit premier segment (21) est inséré dans ledit tube isolant (4) en direction longitudinale et ledit deuxième segment (22) est placé sur ledit tube isolant (4), dans lequel ledit tube isolant (4) est étiré au moins en partie sur ledit premier segment (21) de ladite section d'extrémité (18).

2. Dispositif de protection tactile (1) selon la revendication 1, dans lequel ledit premier segment (21) et ledit deuxième segment (22) sont séparés l'un de l'autre par un intervalle (36).

3. Dispositif de protection tactile (1) selon la revendication 2, dans lequel ledit boîtier (6) comprend deux intervalles (36), dans lequel ledit tube isolant (4) s'étend à travers l'un desdits deux intervalles (36) à partir de l'extérieur dudit boîtier (6) vers l'intérieur et à travers l'autre desdits deux intervalles (36) depuis l'intérieur dudit boîtier (6) vers l'extérieur.

4. Dispositif de protection tactile (1) selon l'une des revendications 1 à 3, dans lequel ledit boîtier (6) est formé de deux moitiés de boîtier (24a, 24b), dans lequel l'une desdites deux moitiés de boîtier (24a) comprend ledit premier segment (21) de ladite section d'extrémité (18) dudit boîtier (6), et dans lequel l'autre desdites deux moitiés de boîtier (24b) comprend ledit deuxième segment (22) de ladite section d'extrémité (18) dudit boîtier (6).

5. Dispositif de protection tactile (1) selon la revendication 4, dans lequel lesdites deux moitiés de boîtier (24a, 24b) comprennent chacune des éléments de verrouillage mutuellement complémentaires (26a, 26b).

6. Dispositif de protection tactile (1) selon l'une des revendications 1 à 5, dans lequel ladite section d'extrémité (18) dudit boîtier (6) et ledit tube isolant (4) comprennent chacun des éléments à assemblage par emboîture mutuellement complémentaires (48a, 48b).

7. Dispositif de protection tactile (1) selon la revendication 6, dans lequel l'un desdits éléments à assemblage par emboîture (48a) est configuré comme une projection (50),tactact et un autre desdits éléments à assemblage par emboîture (48b) est configuré comme un réceptacle (52) qui est complémentaire de ladite projection (50).

8. Dispositif de protection tactile (1) selon la revendication 7, dans lequel ledit élément à assemblage par emboîture (48b) configuré comme un réceptacle (52) est disposé sur ledit tube isolant (4) et est configuré comme une ouverture de passage (54).

9. Dispositif de protection tactile (1) selon la revendication 7 ou 8, dans lequel ledit élément à assemblage par emboîture (48a) configuré comme une projection (50) comprend une extrémité libre (66), et dans lequel ladite extrémité libre (66) comprend un bourrelet de verrouillage (68).

10. Dispositif de protection tactile (1) selon l'une des revendications 1 à 9, dans lequel ledit deuxième segment (22) de ladite section d'extrémité (18) comprend un verrou radial qui verrouille ledit tube isolant (4) sur ledit premier segment (21).

11. Dispositif de protection tactile (1) selon les revendications 5 et 10, dans lequel au moins l'un desdits éléments de verrouillage (26b) est agencé sur ledit deuxième segment (22) et forme ledit verrou radial.

12. Dispositif de protection tactile (1) selon l'une des revendications 6 à 11, dans lequel plusieurs paires d'éléments à assemblage par emboîture (48a, 48b) sont distribuées sur ladite section d'extrémité (18) dudit boîtier (6) et dudit tube isolant (4).

13. Ensemble de connexion (2) avec un dispositif de protection tactile (1) selon l'une des revendications 1 à 12 et avec un conducteur électrique (8), dans lequel ladite extrémité (12) dudit conducteur électrique (8) est disposée dans ledit tube isolant (4) et dans ledit boîtier (6) dudit dispositif de protection tactile (1), dans lequel ledit premier segment (21) de ladite section d'extrémité (18) est inséré dans ledit tube isolant (4) et ledit deuxième segment (22) de ladite section d'extrémité (18) est monté sur ledit tube isolant (4).

14. Ensemble de connexion (2) selon la revendication 13, dans lequel ladite extrémité (12) dudit conducteur électrique (8) est configurée comme un contact de batterie (80).
